# EUROPEAN PATENT APPLICATION

(11) **EP 2 239 894 A1**
(43) Date of publication of application: **13.10.2010**
(21) Application number: 09711142.1
(22) Date of filing: 19.01.2009
(51) Int. Cl.: H04L 12/56

(54) **A TUNNEL SERVICE DATA STREAM CONTROLLING METHOD AND APPARATUS**

(30) Priority: 05.02.2008 CN 200810006240
(71) Applicant: Huawei Technologies Co., Ltd., Longgang District, Shenzhen Guangdong 518129 (CN)
(72) Inventor: HUANG, Shibi, Longgang District Shenzhen 518129 (CN); WANG, Fengbo, Longgang District Shenzhen 518129 (CN); ZUO, Yu, Longgang District Shenzhen 518129 (CN); MAO, Yuxin, Longgang District Shenzhen 518129 (CN); ZHAO, Peng, Longgang District Shenzhen 518129 (CN)
(74) Representative: Kreuz, Georg Maria
(86) International application number: PCT/CN2009/070210
(87) International publication number: WO 2009/100661

(57) **Abstract**

The embodiments of present invention discloses a method for controlling service data flows transmitted in a tunnel, an information sending apparatus, an information enforcing apparatus, and an information reporting apparatus, and relates to the network communications field. With the embodiments of present invention, an access gateway (AGW) can implement correct policy control on data packets transmitted in a tunnel. The method for controlling service data flows transmitted in a tunnel includes: receiving policy information and identification information of service data flows transmitted in a tunnel; and enforcing policy operations on the service data flows according to the policy information and identification information of the service data flows transmitted in the tunnel. In the embodiments of present invention, a policy enforcement function (PEF) may identify data packets transmitted in a tunnel according to the received policy information and identification information. This solves the problem that the PEF cannot identify data packets transmitted in the tunnel in the prior art, and achieves the objectives of controlling the data packets transmitted in the tunnel, allocating access resources to the data packets, and improving the quality of service (QoS).

## Description

This application claims priority to Chinese Patent Application No. 200810006240.7, filed with the Chinese Patent Office on February 5, 2008 and entitled "Method and Apparatus for Controlling Service data flows Transmitted in a Tunnel", which is incorporated herein by reference in its entirety.

### Field of the Invention

The present invention relates to a network communications technology, and in particular, to a technology for controlling service data flows transmitted in a tunnel.

### Background

The 3^{rd} Generation Partnership (3GPP) optimizes and enhances the architecture of radio packet access networks in the system architecture evolution (SAE) defined in TS23.401 and TS23.402. To guarantee the IP mobility of user equipment (UE) and a packet data network gateway (PDN GW), the tunneling technology must be used. If a tunnel is established between a UE and the PDN GW, this scheme is called host-based mobility scheme.

Currently, the user accesses a packet data network (PDN) by using the host-based mobility scheme. In this process, the tunnel gateway, that is, the PDN GW, sends the tunnel information used by data packets in the IP+IP format or in other available formats to a policy and charging rules function (PCRF); the PCRF sets policy information for the data packets.

The PCRF constructs a flow filter by using the filter information of the IP service data flows transmitted in the tunnel, and sends the policy information that carries the flow filter to an access gateway (AGW); the AGW enforces related control policies. The flow filter includes the flow direction of IP service data flows, source/destination IP address, protocol number, source/destination port number, and related operations. The preceding information is used to identify the accessed IP service data flows.

The following problems have become apparent in the prior art: When a data packet is transmitted in a tunnel, the external layer of the original data must be encapsulated by a tunnel header. The AGW cannot identify the tunnel header by using the current flow filter, thus failing to normally control the data packet. Thus, the quality of service (QoS) of the service data flows that are sent to the PDN by using the host-based mobility scheme cannot be guaranteed, which affects the promotion and application of PDN access services using the host-based mobility scheme.

### Summary

To solve the problem that the AGW cannot normally control the data packets transmitted in a tunnel in the prior art, the present invention provides a method and an apparatus for controlling service data flows transmitted in a tunnel.

According to a first aspect of the present invention a method for controlling service data flows transmitted in a tunnel includes:
receiving policy information and identification information of service data flows transmitted in a tunnel; and
enforcing policies on the service data flows according to the policy information and identification information of the service data flows transmitted in the tunnel.

According to a second aspect of the present invention an information sending apparatus includes:
an information generating unit, configured to generate policy information and identification information of service data flows transmitted in a tunnel according to user information, address information, and tunnel information that a PCRF obtains from a tunnel gateway; and
an information sending unit, configured to send the generated policy information and identification information of the service data flows transmitted in the tunnel.

According to a third aspect of the present invention an information enforcing apparatus includes:
a receiving unit, configured to receive policy information and identification information of service data flows transmitted in a tunnel; and
an enforcing unit, configured to enforce policy operations on the service data flows according to the policy information and identification information of the service data flows transmitted in the tunnel.

According to a fourth aspect of the present invention an information reporting apparatus includes:
a reporting unit, configured to report tunnel header filter information to an information sending apparatus.

In the present invention, the information reporting apparatus reports the tunnel header filter information to the information sending apparatus; the information sending apparatus generates policy information and identification information of service data flows transmitted in a tunnel, and sends the policy information and identification information to a policy enforcement function (PEF); the PEF may identify data packets transmitted in the tunnel according to the received policy information and identification information. This solves the problem in the prior art that the PEF cannot identify data packets transmitted in the tunnel, and achieves the objectives of identifying and detecting data packets transmitted in the tunnel, allocating access resources to the identified and detected data packets, and improving the QoS.

### Brief Description of the Drawings

FIG. 1 illustrates architecture of a host-based mobility scheme;
FIG. 2 shows a process of controlling the access to a PDN network by using the host-based mobility scheme;
FIG. 3 illustrates a format of a data packet received and sent by a UE by using the host-based mobility scheme;
FIG. 4 is a flowchart of a method for controlling service data flows transmitted in a tunnel in an embodiment of the present invention;
FIG. 5 shows a structure of a system for controlling service data flows transmitted in a tunnel in an embodiment of the present invention;
FIG. 6 shows a structure of a data packet in an IP+IP format in an embodiment of the present invention;
FIG. 7 shows a structure of a data packet in an IP+UDP+IP format in an embodiment of the present invention;
FIG. 8 shows a structure of a data packet in an IP+ESP+IP format in an embodiment of the present invention;
FIG. 9 shows a structure of a data packet in an IP+UDP+GRE+IP format in an embodiment of the present invention;
FIG. 10 shows a process of controlling the transmission of a data packet in an IP+IP format in a tunnel in an embodiment of the present invention;
FIG. 11 shows a process of controlling the transmission of data packets in an IP+UDP+IP format and an IP+ESP+IP format in a tunnel in an embodiment of the present invention;
FIG. 12 shows a process of controlling the transmission of a data packet in an IP+UDP+GRE+IP format in a tunnel in an embodiment of the present invention; and
FIG. 13 shows a process of controlling service data flows by sending tunnel transmission indication information in an embodiment of the present invention.

### Detailed Description

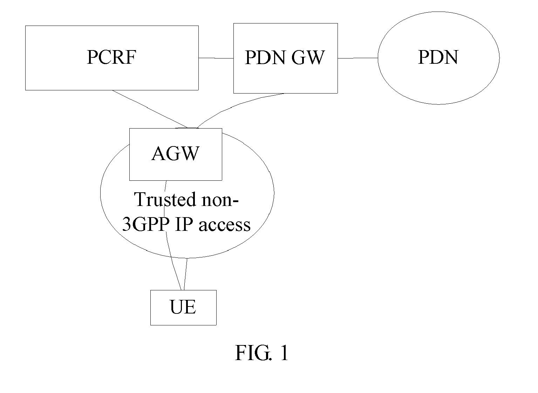

FIG. 1 illustrates the architecture of the host-based mobility scheme. The architecture includes a UE, a PCRF, a PDN GW, an AGW, and a PDN. The following describes the architecture in detail:

The PCRF determines a policy according to the user access network information, operator policies, user subscription data, and ongoing service information of the user, and provides the policy for the PEF to enforce the policy. The policy includes a service data flow detection rule, whether to implement access control, QoS of the service data flows, and a traffic-based charging rule.

The PEF enforces the policy sent from or specified by the PCRF. Specifically, the PEF performs the following operations: detecting and measuring the service data flows to guarantee the QoS of the service data flows, processing flow on the user plane, triggering the session management on the control plane, and performing flow-based charging. In this architecture, the PEF includes the PDN GW and the AGW. Some PEFs need to enforce the charging policy. Some PEFs need not to enforce the charging policy. The PEFs may determine whether to enforce the charging policy according to the actual need.

The PDN provides the user with a packet service-based network. The PDN may be an internal or external packet network of the operator.

The PDN GW is a gateway connected to the PDN that provides services, and is responsible for forwarding and filtering user data flows and allocating an IP address to the user. Specifically, the user accesses the services on the PDN by using the IP address allocated by the PDN GW. The data transmitted between the user and the PDN must be forwarded through the PDN GW

The AGW is located in a non-trusted 3GPP access system in FIG. 1. In the host-based mobility scheme, the AGW needs to allocate a local IP address to the UE.

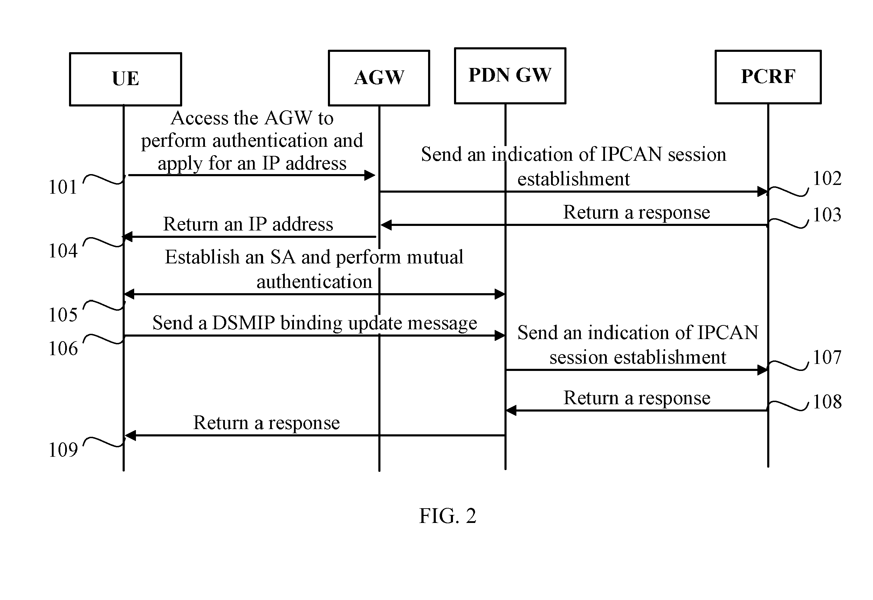

FIG. 2 shows a process of controlling the access to a PDN network by using the host-based mobility scheme. The process includes the following steps.

Step 101: The UE accesses the AGW to perform authentication and apply for an IP address.

Step 102: The AGW serves the user by using the host-based mobility scheme, and allocates an IP address CoA of the access network to the user. The AGW sends an indication of IPCAN session establishment to establish a session control connection with the PCRF, where the indication carries the IP address allocated to the user, user identity, and access network information.

Step 103: The PCRF returns a response that may include related control policies generated for the user to the AGW.

The control policies carry a flow filter and information corresponding to the flow filter such as charging mode and QoS information.

The flow filter includes the flow direction of UE data flows, source/destination IP address, protocol number, source/destination port number, and related operations.

Step 104: The AGW returns an access response that carries a local IP address allocated to the UE to the UE. In addition, the AGW enforces the policies sent from the PCRF, allocates bandwidths to related service data flows, and enforces related charging policies.

Step 105: The UE finds a PDN GW related to the services. The IP address of the PDN GW is HA-a. The UE and the PDN GW perform mutual authentication, and negotiate to establish a security association (SA).

Step 106: The UE sends a Dual Stack Mobile IP protocol (DSMIP) binding update message to the PDN GW, where the DSMIP binding update message indicates that the CoA is a care-of address and carries the tunnel mode used by the media.

Step 107: The PDN GW allocates an IP address HoA to the UE and determines a tunnel mode (among multiple available tunnel modes) used by the UE media flow. In addition, the PDN GW establishes a session control connection with the PCRF, and sends the information such as user identity, HoA, and CoA to the PCRF.

Step 108: The PCRF generates related control policies for the user.

The control policies carry a flow filter and information corresponding to the flow filter such as charging mode, QoS information, and access control.

The flow filter includes the flow direction of IP service data flows, source/destination IP address, protocol number, source/destination port number, and related operations. The preceding information included in the flow filter is used to identify the accessed IP service data flows.

The PCRF needs to find a session control connection between the AGW and the PCRF according to the CoA, and then associate this session control connection with the session control connection between the PCRF and the PDN GW. The purpose of the association is to send the QoS control policy of the service data flows at the HoA to the AGW, so that the AGW allocates related access resources (for example, radio bandwidth) to these service data flows. The PCRF returns a response to the PDN GW, where the response carries policies for controlling the service flows at the HoA.

Step 109: The PDN GW returns a message to the UE, where the message carries the IP address HoA allocated to the UE and information of the tunnel mode used by the media flows. In addition, the PDN GW enforces the policies sent from the PCRF.

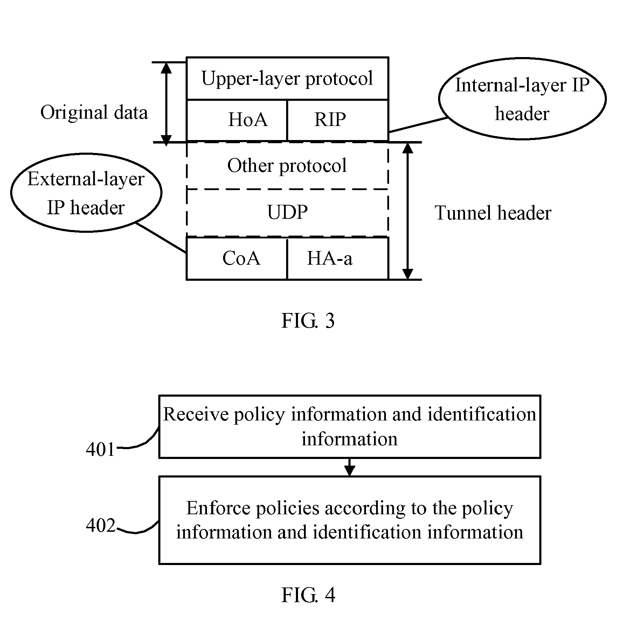

In the host-based mobility scheme, the original data packets received and sent by the UE need to be encapsulated into the tunnel between the both ends addresses CoA and the HA-a. The AGW forwards the encapsulated data packet to the UE or the PDN GW As shown in FIG. 3, the structure of the data packet includes a tunnel header and original data. The original data is encapsulated by the tunnel header.

The original data includes an internal-layer IP header and an upper-layer protocol. The upper-layer protocol is encapsulated by the internal-layer IP header.

The tunnel header may include an external-layer IP header, and other upper-layer protocols may be encapsulated by the external-layer IP header. For example, the User Datagram Protocol (UDP) and other protocols may be encapsulated by r the external-layer IP header; UDP may be encapsulated by external-layer IP header, and other protocols may also be encapsulated by UDP.

The internal-layer IP header consists of an IP address that the PDN GW allocates to the user and an IP address that the PDN provides for the serving entity, that is, the HoA and the RIP. The external-layer IP header consists of addresses of both ends of the tunnel, that is, the CoA and the HA-a.

To solve the problem in the prior art that the AGW cannot normally control the data packets transmitted in the tunnel, embodiments of the present invention provide a method for controlling service data flows transmitted in the tunnel.

The following describes the method in detail with reference to the accompanying drawings and exemplary embodiments.

As shown in FIG. 4, the method for controlling service data flows transmitted in a tunnel includes the following steps:
Step 401: Receive policy information and identification information of service data flows transmitted in the tunnel.
Step 402: Enforce policies on the service data flows according to the policy information and identification information of the service data flows transmitted in the tunnel.

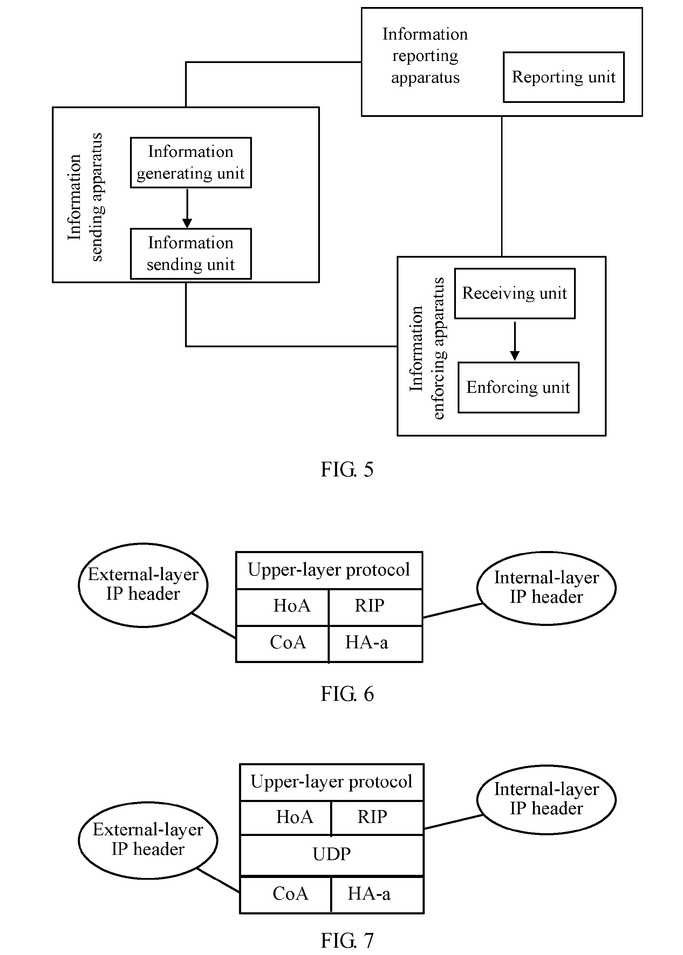

As shown in FIG. 5, the system for controlling service data flows transmitted in a tunnel includes an information reporting apparatus, an information sending apparatus, and an information enforcing apparatus.

The information reporting apparatus is a PDN GW and includes a reporting unit. The PDN GW sends the tunnel header filter information to the information sending apparatus. The tunnel header filter information includes at least one of the following: tunnel IP header information and tunnel encapsulation protocol information. The tunnel header filter information includes at least one piece of tunnel encapsulation protocol information. The tunnel IP header information is encapsulated by the tunnel encapsulation protocol information. The tunnel encapsulation protocol includes at least UDP, Generic Routing Encapsulation (GRE), and Encapsulating Security Payload (ESP).

The information sending apparatus is a PCRF and includes an information generating unit, and an information sending unit. The information generating unit is configured to generate policy information and identification information of service data flows transmitted in the tunnel according to the user information, address information, and tunnel information that the PCRF obtains from the tunnel gateway. The information sending unit is configured to send the generated policy information and identification information to the information enforcing apparatus. The identification information of service data flows transmitted in the tunnel includes tunnel transmission indication information and filter information of IP service data flows transmitted in the tunnel.

The identification information of the service data flows transmitted in the tunnel includes tunnel header filter information and filter information of IP service data flows transmitted in the tunnel. The tunnel header filter information includes at least one of the tunnel IP header information and the tunnel encapsulation protocol information.

The tunnel header filter information includes at least one piece of tunnel encapsulation protocol information. The tunnel IP header information is encapsulated by the tunnel encapsulation protocol information. The tunnel encapsulation protocol includes at least UDP, GRE, and ESP.

The information enforcing apparatus is an AGW and includes a receiving unit and an enforcing unit. The receiving unit is configured to receive the policy information and identification information of the service data flows transmitted in the tunnel. The enforcing unit is configured to enforce policy operations on the service data flows according to the policy information and identification information of the service data flows transmitted in the tunnel. The enforcing unit further includes: an information identifying subunit, configured to identify received service data flows according to the identification information; a policy enforcing subunit, configured to enforce policy operations on identified service data flows according to the policy information. The detailed process is described hereinafter.

The following describes the process in detail with reference to several embodiments regarding service data flows transmitted in a tunnel.

Data packets are transmitted in a tunnel. Data packets in different formats are transmitted in corresponding tunnels. A data packet includes a tunnel header and original data.

The tunnel header filter information may include tunnel IP header information and tunnel encapsulation protocol information. The tunnel encapsulation protocol information includes protocol information such as UDP, GRE, and ESP. The properties of the tunnel encapsulation protocol information include port number, protocol number, key value, and SPI. Multiple pieces of tunnel encapsulation protocol information may be embedded in the tunnel header filter information.

The formats of data packets include at least the following: IP+IP, IP+UDP+IP, IP+ESP+IP, and IP+UDP+GRE+IP. The following describes these formats each.

As shown in FIG. 6, the data packet in the IP+IP format includes a tunnel header and original data. The tunnel header includes an external-layer IP header. The tunnel header filter information includes tunnel IP header information, that is, the address information included in the external-layer IP header. The original data includes an internal-layer IP header and an upper-layer protocol. The upper-layer protocol may be UDP, Transmission Control Protocol (TCP), Stream Control Transmission Protocol (SCTP), Internet Control Message Protocol (ICMP) or other protocols.

The internal-layer IP header consists of the HoA and RIP. The HoA is the IP address that the PDN GW allocates to the user. The RIP is the IP address that the PDN provides for the serving entity.

The external-layer IP header consists of the CoA and HA-a. The CoA is the IP address that the AGW allocates to the user. The HA-a is the address of the PDN GW.

As shown in FIG. 7, the data packet in the IP+UDP+IP format includes a tunnel header and original data. The tunnel header includes an external-layer IP header and UDP. The tunnel header filter information includes information such as address information and UDP included in the external-layer IP header. The tunnel encapsulation protocol information is the UDP information. The original data includes an internal-layer IP header and an upper-layer protocol. The upper-layer protocol may be UDP, TCP, SCTP, ICMP or other protocols.

The internal-layer IP header consists of the HoA and RIP. The HoA is the IP address that the PDN GW allocates to the user. The RIP is the IP address that the PDN provides for the serving entity.

The external-layer IP header consists of the CoA and HA-a. The CoA is the IP address that the AGW allocates to the user. The HA-a is the address of the PDN GW.

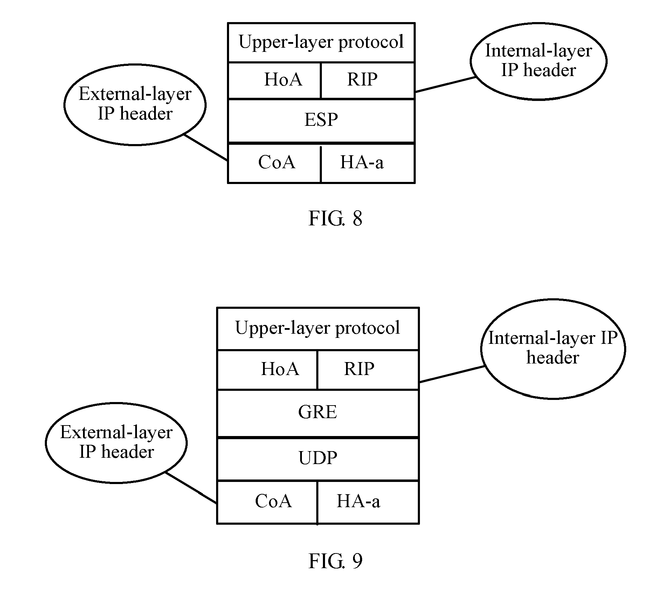

As shown in FIG. 8, the data packet in the IP+ESP+IP format includes a tunnel header and original data. The tunnel header includes an external-layer IP header and ESP. The tunnel header filter information includes information such as address information and ESP information included in the external-layer IP header. The tunnel encapsulation protocol information is the ESP information. The original data includes an internal-layer IP header and an upper-layer protocol. The upper-layer protocol may be UDP, TCP, SCTP, ICMP or other protocols.

The internal-layer IP header consists of the HoA and RIP. The HoA is the IP address that the PDN GW allocates to the user. The RIP is the IP address that the PDN provides for the serving entity.

The external-layer IP header consists of the CoA and HA-a. The CoA is the IP address that the AGW allocates to the user. The HA-a is the address of the PDN GW

As shown in FIG. 9, the data packet in the IP+UDP+GRE+IP format includes a tunnel header and original data. The tunnel header includes an external-layer IP header, UDP, and GRE. The tunnel header filter information includes information such as address information, UDP, and GRE included in the external-layer IP header. The tunnel encapsulation protocol information is the UDP information and GRE information. The original data includes an internal-layer IP header and an upper-layer protocol. The upper-layer protocol may be UDP, TCP, SCTP, ICMP or other protocols.

The internal-layer IP header consists of the HoA and RIP. The HoA is the IP address that the PDN GW allocates to the user. The RIP is the IP address that the PDN provides for the serving entity.

The external-layer IP header consists of the CoA and HA-a. The CoA is the IP address that the AGW allocates to the user. The HA-a is the address of the PDN GW.

The following describes processes of controlling the transmission of data packets in different formats in the tunnel.

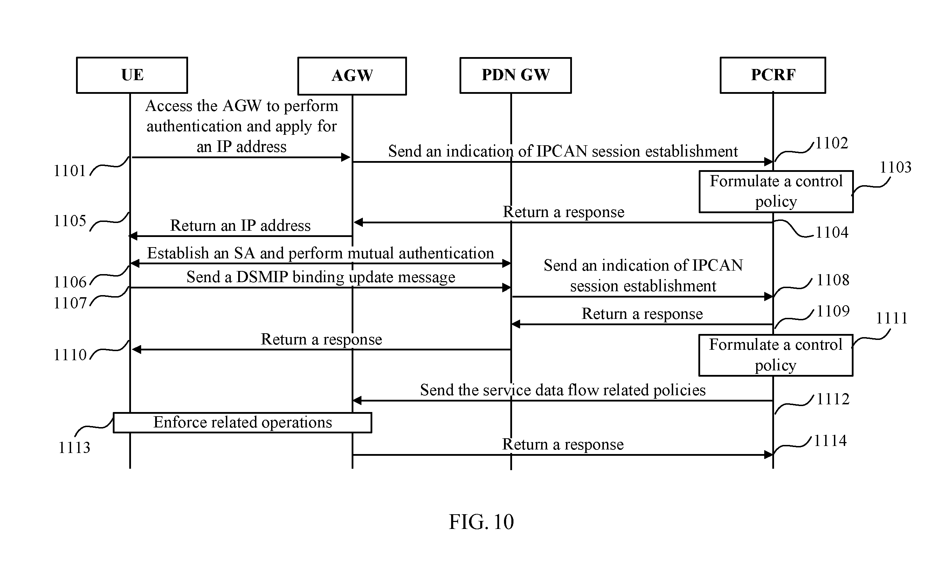

FIG. 10 shows a process of controlling the transmission of a data packet in the IP+IP format in a tunnel in an embodiment of the present invention.

In this control process, the tunnel gateway (also the PDN GW) sends the tunnel information used by the data packet in the IP+IP format to the PCRF, and the PCRF sets policy information for the data packet.

The PCRF constructs a flow filter by combining the filter information of IP service data flows transmitted in the tunnel and the tunnel header filter information, and then sends the policy information to the AGW; the AGW enforces related control policies.

The specific control process includes the following steps:
Step 1101: The UE accesses the access system. The UE and the AGW in the access system perform mutual authentication. The AGW serves the UE by using the host-based mobility scheme. The AGW allocates a local IP address CoA to the UE.
Step 1102: The AGW sends an indication of IPCAN session establishment to the PCRF to establish a session control connection. The indication of IPCAN session establishment includes the IP address CoA that the AGW allocates to the UE, user identity, and access network information, etc.
Step 1103: The PCRF generates policy information. The policy information indicates: sending a data stream to the UE via the UDP port 434; reserving a bandwidth of 1 Mbps for the downlink service data flow according to a preset rule, an address HA-a of the PDN GW, a priority, and a flow filter. The flow filter is configured to describe the information of the data flow as follows:

The service data flow is transmitted to the user; the source IP address of the data flow is HA-a; the destination IP address of the data stream is CoA; the protocol number of upper-layer UDP is 17; the source port of upper-layer UDP is port 434; the destination port may be any port.

Step 1104: The PCRF returns a response that carries the policy information to the AGW.

Step 1105: The AGW returns a response to the UE, where the response carries the CoA that the AGW allocates to the UE. In addition, the AGW enforces the policy indicated in the policy information sent from the PCRF. For example: The PDN GW sends the data to the UE by using the UDP port 434; the AGW reserves a bandwidth of 1 Mbps for the data flow.

Step 1102 to step 1105 describe a process of establishing a session control connection between the AGW and the PCRF.

Step 1106: The UE needs to access the PDN through the PDN GW to use related services. Thus, the UE obtains the address HA-a of the PDN GW, and negotiates with the PDN GW to establish an SA. The PDN GW and the UE may perform authentication.

Step 1107: The UE sends a DSMIP binding update message to the PDN GW, where the DSMIP binding update message carries the CoA information and some tunnel related indications.

Step 1108: The PDN GW allocates the IP address HoA to the UE, determines that the tunnel mode between the PDN GW and the UE is IP-in-IP, and establishes a session control connection with the PCRF. The PDN GW sends information such as user identity, HoA, and CoA to the PCRF. In addition, the tunnel gateway (also the PDN GW) needs to send the tunnel information to the PCRF. The tunnel information includes at least IP addresses of both ends of the tunnel (that is, the HA-a and the CoA) and tunnel type ID IP+IP.

The PCRF finds a session control connection established between the AGW and the PCRF according to the CoA. Then, the PRCF associates the session control connection between the PDN GW and the PCRF with the session control session between the AGW and the PCRF. In this way, the QoS policy information of the original data may be sent to the AGW through this connection so that the AGW may allocate related access resources to the original data.

Step 1109: The PCRF returns a response to the PDN GW.

Step 1110: The PDN GW returns a binding acknowledgement (ACK) to the UE, where the binding ACK carries the IP address HoA allocated to the UE.

Step 1107 to step 1110 describe a process of establishing a session control connection between the PDN GW and the PCRF and associating this connection with the session control connection between the AGW and the PCRF.

Step 1111: The PCRF formulates a policy for a PDN service data flow of the UE. For example, the user address is HoA; the server address to be accessed is RIP; the upper-layer protocol is TCP; and the port number is 21. When the user accesses the server, the downlink data flow requires a bandwidth of 1 Mbps. Thus, the PCRF constructs control policies for the data flow, such as a flow filter. The flow filter includes:

The data stream is transmitted to the user; the source IP address of the original data is RIP; the destination IP address is HoA; the upper-layer protocol is TCP; the property of the upper-layer protocol is as follows: the protocol number is 6; the source port is port 21; and the destination port is any port.

What has been described is a flow filter for the original data transmitted in the tunnel. If the PCRF sends the flow filter to the AGW, the AGW cannot identify related data flows because the original data of the data packet is encapsulated.

To enable the AGW to identify the data packet and normally enforce related policies, the PCRF needs to add the tunnel header filter information to the current flow filter to construct a new flow filter. The new flow filter is described as follows:

The data flow is transmitted to the user; the source IP address of the external-layer IP header in the data packet encapsulated into the tunnel is HA-a; the destination address is CoA. At this time, the internal-layer IP header is over the external-layer IP header. The internal-layer IP header may be regarded as the upper-layer protocol of the external-layer IP header. The upper-layer protocol of the external-layer IP header is an IP protocol; and the upper-layer protocol number of the external-layer IP header is 4. The source address of the internal-layer IP header of the original data is RIP; the destination address is HoA; the upper-layer protocol of the original data is TCP; the protocol number of the original data is 6; the source port of the original data is port 21; and the destination port of the original data is any port.

Step 1112: The PCRF sends the flow filter to the AGW through the session control connection established in step 1108. The flow filter related policy information includes QoS information.

Step 1113: The AGW enforces related operations according to the policies from the PCRF, for example, forwarding the data packet or allocating related access resources to the UE.

Step 1114: The AGW returns a response to the PCRF.

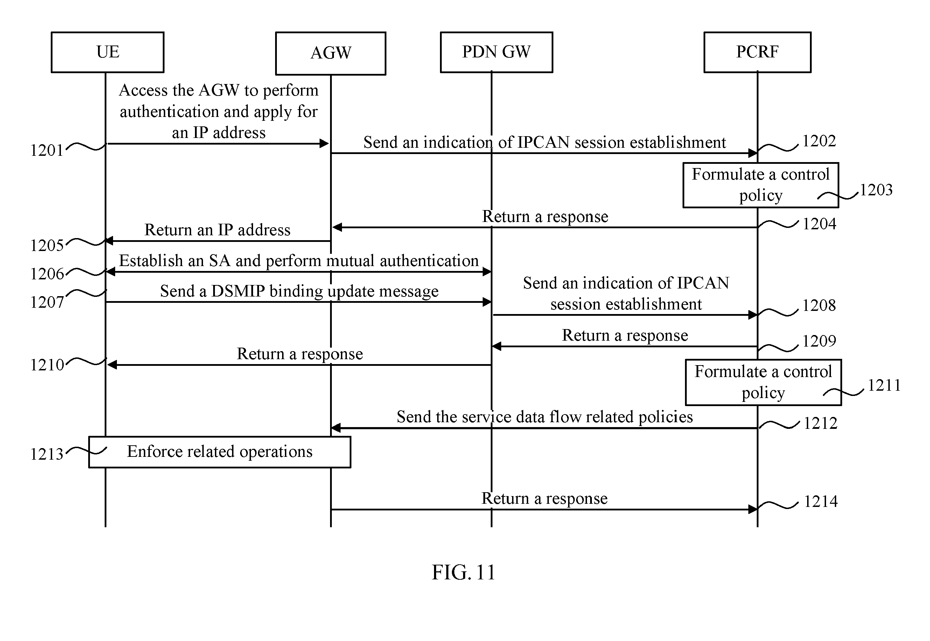

FIG. 11 shows a process of controlling the transmission of data packets in the IP+UDP+IP format and the IP+ESP+IP format in an embodiment of the present invention.

In this control process, the PDN GW sends the information of the tunnel used by the data packets in the IP+UDP+IP format and the IP+ESP+IP format to the PCRF; the PCRF sets policy information for the related service data.

The PCRF constructs a flow filter by combining the tunnel header filter information and the filter information of IP service data flows transmitted in the tunnel, and then sends the policy information to the AGW; the AGW enforces related control policies.

The difference between this control process and the control process shown in FIG.10 is as follows:
Step 1207: The UE sends a DSMIP binding update message to the PDN GW, where the DSMIP binding update message carries the CoA information and some tunnel related indications.
Step 1208: The PDN GW allocates the IP address HoA to the UE, determines that the tunnel mode between the PDN GW and the UE is IP+UDP+IP and IP+ESP+IP, and establishes a session control connection with the PCRF. The PDN GW sends information such as user identity, HoA, and CoA to the PCRF. In addition, the PDN GW needs to send the tunnel information to the PCRF. The tunnel information includes at least IP addresses of both ends of the tunnel (that is, the HA-a and the CoA) and tunnel type IDs IP+UDP+IP and IP+ESP+IP.

The PCRF finds the session control connection established between the AGW and the PCRF according to the CoA. Then, the PRCF associates the session control connection between the PDN GW and the PCRF with the session control session between the AGW and the PCRF. In this way, the QoS control information of the original data may be sent to the AGW through this connection so that the AGW may allocate related access resources to the original data.

Step 1211: The PCRF formulates a policy for a PDN service data flow of the UE. For example, the user address is HoA; the server address to be accessed is RIP; the tunnel encapsulation protocol type is UDP; the port is port 4500. When the user accesses the server, the uplink data stream requires a bandwidth of 1 Mbps. Then, the PCRF constructs control policies including a flow filter for the data flow. The flow filter includes:

The data flow is transmitted from the user; the source IP address of the original data is HoA; the destination IP address is RIP; the tunnel encapsulation protocol is UDP; the property information of the tunnel encapsulation protocol is as follows: the protocol number is 17; the source port is any port; and the destination port is port 4500.

What has been described is a flow filter for the original data transmitted in the tunnel. If the PCRF sends the flow filter to the AGW, the AGW cannot identify related data flows because the original data of the data packet is encapsulated.

To enable the AGW to identify and forward the data packet, the PCRF needs to add the tunnel header filter information to the current flow filter to construct a new flow filter. The new flow filter is described as follows:
1. The data flow is transmitted from the user; the source address of the external-layer IP header in the data packet encapsulated in the tunnel is CoA; the destination address is HA-a; the tunnel encapsulation protocol is UDP; the property information of the tunnel encapsulation protocol is as follows: the UDP port is any port; the UDP destination port is port 434; the upper-layer protocol of UDP is IP, that is, the internal-layer IP header of the original data; the source address of the internal-layer IP header is HoA; the destination address of the internal-layer IP header is RIP; the upper-layer protocol of the internal-layer IP header is UDP; the protocol of the internal-layer IP header is port 17; the source port of the internal-layer IP header is any port; and the destination port of the internal-layer IP header is port 4500.
2. The data flow is transmitted from the user; the source address of the external-layer IP header in the data packet encapsulated in the tunnel is CoA; the destination address is HA-a; the tunnel encapsulation protocol is ESP; the property information of the tunnel encapsulation protocol is as follows: the SPI value is 2000; the upper-layer protocol of ESP is IP, that is, the internal-layer IP header of the original data; the source address of the internal-layer IP header is HoA; the destination address of the internal-layer IP header is RIP; the upper-layer protocol of the internal-layer IP header is UDP; the protocol of the internal-layer IP header is port 17; the source port of the internal-layer IP header is any port; and the destination port of the internal-layer IP header is port 4500.

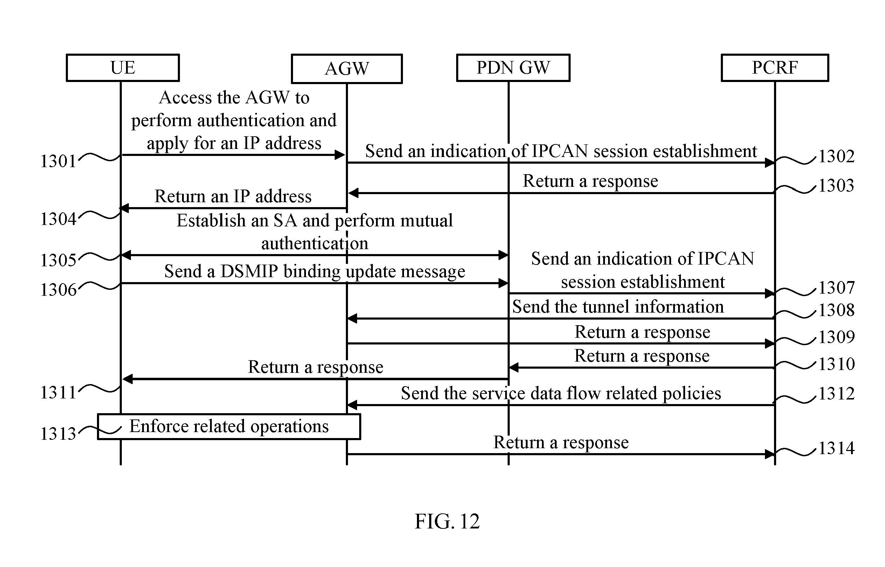

FIG. 12 shows a process of controlling the transmission of a data packet in the IP+UDP+GRE+IP format in an embodiment of the present invention.

In this control process, the PDN GW sends the information of the tunnel used by the data packet in the IP+UDP+GRE+IP format to the PCRF; the PCRF sets policy information for the corresponding service data flows.

The PCRF sends the tunnel header filter information and the filter information of IP service data flows transmitted in the tunnel to the AGW separately.

The AGW constructs a local flow filter by combining the filter information of IP service data flows transmitted in the tunnel and the tunnel header filter information.

The AGW enforces related control policies.

The specific control process includes the following steps:
Step 1301: The UE accesses the access system. The UE and the AGW in the access system perform mutual authentication. The AGW serves the UE by using the host-based mobility scheme. The AGW allocates a local IP address CoA to the UE.
Step 1302: The AGW sends an indication of IPCAN session establishment to the PCRF to establish a session control connection. The indication of IPCAN session establishment includes the IP address CoA that the AGW allocates to the UE, user identity, and access network information, etc.
Step 1303: The PCRF returns a response that carries the control policy to the AGW.
Step 1304: The AGW returns a response to the UE, where the response carries the IP address CoA that the AGW allocates to the UE. In addition, the AGW may enforce the policy sent from the PCRF.
Step 1302 to step 1304 describe a process of establishing a session control connection between the AGW and the PCRF.
Step 1305: The UE needs to access the PDN through the PDN GW to use related services. Thus, the UE obtains the address HA-a of the PDN GW, and negotiates with the PDN GW to establish an SA. The PDN GW and the UE may perform authentication.
Step 1306: The UE sends a DSMIP binding update message to the PDN GW, where the DSMIP binding update message carries the CoA information and some tunnel related indications.
Step 1307: The PDN GW allocates the IP address HoA to the UE, determines that the tunnel mode between the PDN GW and the UE is IP+UDP+GRE+IP, and establishes a session control connection with the PCRF. The PDN GW sends information such as user identity, HoA, and CoA to the PCRF. In addition, the PDN GW needs to send the tunnel information to the PCRF. The tunnel information includes at least IP addresses of both ends of the tunnel (that is, the HA-a and the CoA) and some tunnel information. The tunnel information includes the tunnel type ID IP+UDP+GRE+IP, UDP port, and key value of the GRE. For example, the UDP port of the CoA is any port; the UDP port of the HA-a is port 434; the key of GRE sent to the CoA is 1000; the key of GRE sent to the HA-a is 1000.
Step 1308: The PCRF finds the session control connection between the AGW and the PCRF according to the CoA, and associates this session control connection with the session control connection between the PDN GW and the PCRF. Then, the PCRF sends the tunnel header filter information to the AGW. The information filter is described as follows:
   The direction of the data flow transmits in the tunnel; the UE address of the external-layer IP header of the tunnel header is CoA; the IP address of the tunnel gateway (also the PDN GW) is HA-a; the tunnel encapsulation protocol is UDP and GRE; the property information of UDP includes: the port of the UE is any port; the port of the PDN GW is port 434; the GRE protocol is encapsulated by UDP protocol; the property information of GRE includes: the key value is 1000; an internal-layer IP header is encapsulated by GRE protocol; the UE IP address of the IP header is HoA.
Step 1309: The AGW returns a response to the PCRF, and stores the received tunnel header filter information.
Step 1310: The PCRF returns a response to the PDN GW
Step 1311: The PDN GW returns a binding ACK to the UE, where the binding ACK carries the IP address HoA allocated to the UE.
Step 1307 to step 1311 describe a process of establishing a session control connection between the PDN GW and the PCRF and associating this connection with the session control connection between the AGW and the PCRF and sending the tunnel header filter information.
Step 1312: The PCRF formulates and sends a policy for a PDN service data flow. For example, the user address is HoA; the server address to be accessed is RIP and the UDP port accessing the RIP is port 4500. When the user accesses the server, the uplink data flow requires a bandwidth of 1 Mbps. Then, the PCRF constructs control policies including a flow filter for the data flow. The flow filter includes:
   The data flow is transmitted from the user; the source IP address of the original data is HoA; the destination IP address is RIP; the upper-layer protocol is UDP; the protocol number is 17; the source port is any port; and the destination port is port 4500.
   At this time, the PCRF sends the filter to the AGW. In addition, the filter may carry an indication requiring the AGW to use the tunnel header filter information to the filter or the AGW directly determines to use the tunnel header filter information according to the HoA in the flow filter.
Step 1313: The AGW enforces related operations according to the indication sent from the PCRF. For example, the AGW allocates related access resources to the UE. Specifically, the AGW uses the tunnel header filter information or the AGW directly determines to use the tunnel header filter information according to the HoA address in the flow filter. Then, the AGW constructs a local flow filter by combining the tunnel header filter information and the received flow filter. The local flow filter is described as follows:
   The data flow is transmitted from the user; the source IP address of the external-layer IP header in the data packet encapsulated in the tunnel is CoA; the destination address is HA-a; the tunnel encapsulation protocol is UDP and GRE; the property information of UDP includes: the source port is any port; the destination port is port 434; the upper-layer protocol of UDP is GRE; the property information of GRE includes: the key value of GRE is 1000; an internal-layer IP header is encapsulated by GRE protocol; the source address of the internal-layer IP header is HoA; the destination IP address is RIP; the upper-layer protocol is UDP; the protocol number is 17; the source port of GRE is any port; and the destination port is port 4500.
Step 1314: The AGW returns a response to the PCRF.

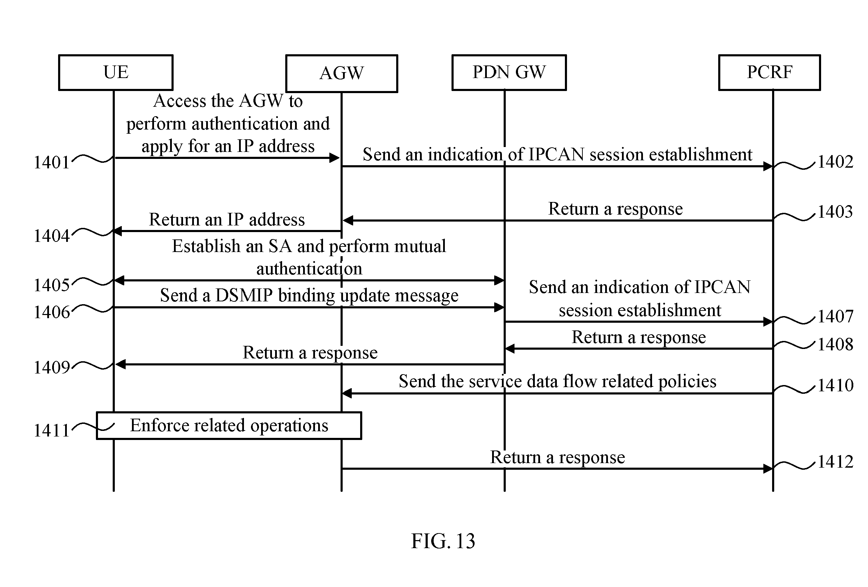

FIG. 13 shows a process of controlling service data flows by sending tunnel transmission indication information in an embodiment of the present invention.

In this embodiment, the PCRF does not need to send a specific type of tunnel and filter information to the AGW, but only needs to send an indication indicating that the data packet is encapsulated into the tunnel to the AGW, where the indication is a tunnel transmission indication. After receiving this indication and receiving or transmitting the data packet of the user, the AGW finds the internal service data flow and then performs policy control.

The control process includes the following steps:
Step 1401: The UE accesses the access system. The UE and the AGW in the access system perform mutual authentication. The AGW serves the UE by using the host-based mobility scheme. The AGW allocates a local IP address CoA to the UE.
Step 1402: The AGW sends an indication of IPCAN session establishment to the PCRF to establish a session control connection, where the indication includes the CoA that the AGW allocates to the UE, user identity, and access network information. The session control connection corresponds to the CoA that the AGW allocates to the UE. Related control policies need to be sent according to the CoA, such as QoS, access control, and charging policies.
Step 1403: The PCRF returns a response that includes related control policies to the AGW.
Step 1404: The AGW returns a response to the UE, where the response may carry the CoA that the AGW allocates to the UE. In addition, the AGW may enforce the control policies sent from the PCRF.
Step 1405: The UE needs to access the PDN through the PDN GW to use related services. Thus, the UE obtains the address Ha-a of the PDN GW and negotiates with the PDN GW to establish an SA. The PDN GW and the UE may perform mutual authentication.
Step 1406: The UE sends a DSMIP binding update message to the PDN GW, where the DSMIP binding update message carries the CoA information, and may also carry some tunnel related indications.
Step 1407: The PDN GW allocates an IP address HoA to the UE, and determines a tunnel mode that can be used between the PDN GW and the UE. The PDN GW requests the PCRF to establish a session control connection, where the session control connection corresponds to the HoA that the PDN GW allocates to the UE. Related control policies need to be sent according to the HoA. The tunnel gateway (also the PDN GW) sends the information such as user identity, HoA, and CoA to the PCRF. The PCRF finds the session control connection between the AGW and the PCRF according to the CoA.
Step 1408: The PCRF returns a response to the PDN GW
Step 1409: The PDN GW returns a binding ACK to the UE, where the binding ACK carries the HoA allocated to the UE.
Step 1410: The PCRF formulates a policy for a PDN service data flow of the UE. For example, the user address is HoA; the UDP port of the RIP to be accessed is port 4500. When the data stream is sent from the user address to the server, a bandwidth of 1 Mbps is needed. The PCRF constructs a flow filter for the service data flow. The flow filter is described as follows:
   The data flow is transmitted from the user; the source IP address is HoA; the destination IP address is RIP; the tunnel encapsulation protocol is UDP; the property of UDP includes: the protocol number is 17; the source port is any port; and the destination port is port 4500.

What has been described is a flow filter for the original data transmitted in the tunnel. If the PCRF sends the flow filter to the AGW, the AGW cannot identify related data streams because the original data of the data packet is encapsulated.

To enable the AGW to identify and control the data packet, the PCRF needs to add a tunnel encapsulation indication to the flow filter when sending the existing flow filter to the AGW

The PCRF sends a control policy to the AGW through the session control connection established in step 1407, where the control policy includes an indication of a flow filter and a tunnel encapsulation.

Step 1411: The AGW enforces related operations according to the policy, for example, allocating related access resources to the UE. In addition, when the AGW receives the user data, the AGW identifies and detects the encapsulated data packet according to the received tunnel transmission indication information, thus normally controlling the IP service data flows transmitted in the tunnel.

Step 1412: The AGW returns a response to the PCRF.

In the embodiments of the present invention, the information reporting apparatus reports the tunnel header filter information to the information sending apparatus; the information sending apparatus generates policy information and identification information of service data flows transmitted in a tunnel, and sends the policy information and identification information of service data flows transmitted in the tunnel to the PEF; the PEF may identify data packets transmitted in the tunnel according to the received policy information and identification information. This solves the problem that the PEF cannot identify data packets transmitted in the tunnel in the prior art, and achieves the objectives of identifying and detecting data packets transmitted in the tunnel, allocating access resources to the identified and detected data packets, and improving the QoS.

Through the description of the foregoing embodiments, it is understandable to those skilled in the art that the embodiments of the present invention may be implemented through hardware or through software and a necessary general hardware platform. Based on this understanding, the technical solution of the embodiments of present invention may be embodied by a software product. The software product may be stored in a computer readable storage medium (a CD-ROM, a USB disk, or a mobile hard disk) and includes multiple instructions that instruct a computer device (a personal computer, a server or a network device) to execute methods provided in embodiments of the present invention.

## Claims

1. A method for controlling service data flows transmitted in a tunnel, comprising:
receiving policy information and identification information of service data flows transmitted in a tunnel; and
enforcing policies on the service data flows according to the policy information and identification information of the service data flows transmitted in the tunnel.

2. The method of claim 1, wherein the identification information of the service data flows transmitted in the tunnel comprises tunnel transmission indication information and filter information of IP service data flows transmitted in the tunnel.

3. The method of claim 1, wherein the identification information of the service data flows transmitted in the tunnel comprises tunnel header filter information and filter information of IP service data flows transmitted in the tunnel, wherein the tunnel header filter information comprises at least one of the following: tunnel IP header information and tunnel encapsulation protocol information.

4. The method of claim 3, wherein the tunnel header filter information is obtained by a policy and charging rules function, PCRF, from a tunnel gateway.

5. The method of claim 3, wherein the tunnel header filter information comprises at least one piece of tunnel encapsulation protocol information, wherein the tunnel encapsulation protocol information is encapsulated by the tunnel IP header information and the tunnel encapsulation protocol comprises: User Datagram Protocol, UDP, Generic Routing Encapsulation, GRE, and Encapsulating Security Payload, ESP.

6. The method of claim 3, wherein the identification information is transmitted by using the following two methods: the tunnel header filter information and the filter information of IP service data flows transmitted in the tunnel are transmitted together; the tunnel header filter information and the filter information of IP service data flows transmitted in the tunnel are transmitted separately.

7. The method of claim 6, wherein the step of enforcing policies on the service data flows according to the policy information and identification information of the service data flows transmitted in the tunnel comprises:
identifying received service data flows according to the identification information; and
enforcing policies on the identified service data flows according to the policy information.

8. An information sending apparatus, comprising:
an information generating unit, configured to generate policy information and identification information of service data flows transmitted in a tunnel according to user information, address information, and tunnel information that a policy and charging rules function, PCRF, obtains from a tunnel gateway; and
an information sending unit, configured to send the generated policy information and identification information of the service data flows transmitted in the tunnel.

9. The information sending apparatus of claim 8, wherein the identification information of the service data flows transmitted in the tunnel comprises tunnel transmission indication information and filter information of IP service data flows transmitted in the tunnel.

10. The information sending apparatus of claim 8, wherein the identification information of the service data flows transmitted in the tunnel comprises tunnel header filter information and filter information of IP service data flows transmitted in the tunnel, wherein the tunnel header filter information comprises at least one of the following: tunnel IP header information and tunnel encapsulation protocol information.

11. The information sending apparatus of claim 10, wherein the tunnel header filter information comprises at least one piece of tunnel encapsulation protocol information, wherein the tunnel encapsulation protocol information is encapsulated by the tunnel IP header information and the tunnel encapsulation protocol comprises at least the following: User Datagram Protocol, UDP, Generic Routing Encapsulation, GRE, and Encapsulating Security Payload, ESP.

12. The information sending apparatus of claim 10, wherein the identification information is transmitted by using the following two methods: the tunnel header filter information and the filter information of IP service data flows transmitted in the tunnel are transmitted together; the tunnel header filter information and the filter information of IP service data flows transmitted in the tunnel are transmitted separately.

13. An information enforcing apparatus, comprising:
a receiving unit, configured to receive policy information and identification information of service data flows transmitted in a tunnel; and
an enforcing unit, configured to enforce related operations on the service data flows according to the policy information and identification information of the service data flows transmitted in the tunnel.

14. The information enforcing apparatus of claim 13, wherein the identification information of the service data flows transmitted in the tunnel comprises tunnel transmission indication information and filter information of IP service data flows transmitted in the tunnel.

15. The information enforcing apparatus of claim 13, wherein the identification information of the service data flows transmitted in the tunnel comprises tunnel header filter information and filter information of IP service data flows transmitted in the tunnel, wherein the tunnel header filter information comprises at least one of the following: tunnel IP header information and tunnel encapsulation protocol information.

16. The information enforcing apparatus of claim 15, wherein the identification information is transmitted by using the following two methods: the tunnel header filter information and the filter information of IP service data flows transmitted in the tunnel are transmitted together; the tunnel header filter information and the filter information of IP service data flows transmitted in the tunnel are transmitted separately.

17. The information enforcing apparatus of claim 16, wherein the enforcing unit comprises:
an information identifying subunit, configured to identify received service data flows according to the identification information; and
a policy enforcing subunit, configured to enforce policy operations on the identified service data flows according to the policy information.

18. An information reporting apparatus, comprising:
a reporting unit, configured to report tunnel header filter information to an information sending apparatus.

19. The information reporting apparatus of claim 18, wherein the tunnel header filter information comprises at least one of the following: tunnel IP header information and tunnel encapsulation protocol information.
